# EUROPEAN PATENT APPLICATION

(11) **EP 2 561 923 A1**
(43) Date of publication of application: **27.02.2013**
(21) Application number: 11178483.1
(22) Date of filing: 23.08.2011
(51) Int. Cl.: B01D 71/68, B01D 71/78, C08G 81/02, C08L 81/06

(54) **Graft copolymers**

(71) Applicant: Gambro Lundia AB, 220 10 Lund (SE)
(72) Inventor: Krause, Bernd, 72414 Rangendingen (DE); Goehl, Hermann, 72406 Bisingen (DE); Storr, Markus, 70794 Filderstadt (DE); Menda, Ralf, 72411 Bodelshausen (DE)
(74) Representative: Perchenek, Nils

(57) **Abstract**

The present disclosure relates to a method for preparing graft copolymers of hydrophobic polymers and hydrophilic polymers, to graft copolymers prepared by said method, and their use in membranes for medical treatments like haemodialysis, haemodiafiltration, haemofiltration and plasma separation, in membranes for water purification, and membranes for bioprocessing.

## Description

### Technical Field

The present disclosure relates to a method for preparing graft copolymers of hydrophobic polymers and hydrophilic polymers, to graft copolymers prepared by said method, and their use in membranes for medical treatments like haemodialysis, haemodiafiltration, haemofiltration and plasma separation, in membranes for water purification, and membranes for bioprocessing.

### Background of the invention

Diffusion and/or filtration devices comprising hollow fiber membranes are used in various medical treatments which remove unwanted substances from body fluids, e.g. blood. Examples of such treatments are haemodialysis, haemodiafiltration and haemofiltration. The hollow fiber membranes usually comprise a hydrophobic polymer and a hydrophilic polymer. Polysulfones and polyethersulfones have been used as hydrophobic polymers in the preparation of such membranes and polyvinylpyrrolidone has been used as a hydrophilic polymer.

EP 0 615 778 A1 describes a process for immobilizing polyvinylpyrrolidone on or in a membrane by treating the membrane with an aqueous peroxodisulfate-containing solution at a temperature between 50 and 80°C, followed by a rinsing step of the modified membrane.

US 2006/0076288 A1describes a method for producing hydrophilic polyethersulfone (PES) membranes. The method comprises the steps of providing a hydrophobic PES membrane, prewetting the membrane in a liquid, exposing the wet membrane to an aqueous solution of an oxidizer, and heating the PES membrane. As oxidizer, ammonium persulfate, hydrogen peroxide and sodium hypochlorite were used.

However, a graft polymerization process to form copolymers of at least one hydrophobic and one hydrophilic polymer starting from the respective polymers is desired.

### Summary of the Invention

It has now been found that graft copolymers of hydrophobic polymers and hydrophilic polymers can be obtained by radical initiator-induced grafting polymerization of a hydrophilic polymer onto a hydrophobic polymer in solution ('grafting to'). In one embodiment of the invention, the radical initiator is a redox initiator. The graft copolymers can be used to prepare membranes, for instance flat sheet membranes or hollow fiber membranes, for medical treatments like haemodialysis, haemodiafiltration and haemofiltration.

### Detailed Description

The present invention provides a process for preparing a graft copolymer comprising the steps of
i) forming a polymer solution by dissolving at least one polysulfone or polyethersulfone and at least one polyvinylpyrrolidone in at least one solvent;
ii) adding a radical initiator to the polymer solution; and
iii) heating the polymer solution with the at least one radical initiator at a temperature at which the radical initiator decomposes.

In one embodiment of the invention, a polysulfone having a weight average molecular weight of from 40,000 to 100,000 g/mol, for instance, 70,000 to 85,000 g/mol, is used as a starting material. Examples of suitable polysulfones are available from Solvay S.A., under the trade name Udel^{®} P-1700 NT LCD, Udel^{®} P-1800, Udel^{®} P-3500 NT LCD, and Udel^{®} P-1835, or from BASF S.E., under the trade name Ultrason^{®} S 6010.

In one embodiment of the invention, a polyethersulfone hav― ing a weight average molecular weight of from 30,000 to 80,000 g/mol, for instance, from 40,000 to 60,000 g/mol, is used as a starting material. Examples of suitable polyethersulfones are available from BASF S.E., under the trade name Ultrason^{®} E 6020 P, or from Solvay S.A., under the trade name Gafone^{®} 3000P, Gafone^{®} 3100P and Gafone^{®} 3200P.

In one embodiment of the invention, a polyvinylpyrrolidone having a number average molecular weight of from 10,000 to 500,000 g/mol and a weight average molecular weight of from 40,000 to 2,500,000 g/mol is used as a starting material. Examples include a polyvinylpyrrolidone having a number average molecular weight of from 10,000 to 20,000 g/mol and a weight average molecular weight of 40,000 to 60,000 g/mol, a polyvinylpyrrolidone having a number average molecular weight of from 150,000 to 500,000 g/mol and a weight average molecular weight of 700,000 to 2,500,000 g/mol, a polyvinylpyrrolidone having a number average molecular weight of from 200,000 to 400,000 g/mol and a weight average molecular weight of 900,000 to 2,000,000 g/mol, and a polyvinylpyrrolidone having a number average molecular weight of from 200,000 to 300,000 g/mol and a weight average molecular weight of 900,000 to 1,200,000 g/mol. In another embodiment, a mixture of a polyvinylpyrrolidone having a molecular weight of less than 100,000 g/mol and a polyvinylpyrrolidone of at least 100,000 g/mol is used as a starting material. Examples of suitable polyvinylpyrrolidones are available from BASF S.E., under the trade name Luvitec^{®}. An example of a suitable polyvinylpyrrolidone hav― ing a molecular weight of less than 100,000 g/mol is avail― able under the trade name Luvitec^{®} K30. Examples of suitable polyvinylpyrrolidones having a molecular weight of at least 100,000 g/mol are available under the trade name Luvitec^{®} K85 or Luvitec^{®} K90, respectively.

In one embodiment of the invention, the at least one solvent is selected from the group consisting of N-methylpyrrolidone (NMP), N-ethylpyrrolidone, N-octylpyrrolidone or mixtures thereof. In one embodiment, the solvent is NMP.

In another embodiment of the invention, the solvent is dimethyl acetamide (DMAc).

In still another embodiment of the invention, the solvent is dimethyl formamide (DMF).

In still another embodiment of the invention, the solvent is dimethyl sulfoxide (DMSO).

In one embodiment of the invention, the concentration of the at least one solvent is from 60 to 98 wt%, relative to the total weight of the solution.

In one embodiment of the invention, the concentration of the at least one polysulfone or polyethersulfone is from 1 to 30 wt%, for instance from 1 to 5 wt%, or from 10 to 20 wt%, relative to the total weight of the solution.

In one embodiment of the invention, the concentration of the at least one polyvinylpyrrolidone is from 1 to 10 wt%, for instance from 1 to 3 wt%, or from 4 to 8 wt%, relative to the total weight of the solution.

In one embodiment of the invention, the graft copolymerization is started by a radical initiator. In one embodiment of the invention, the radical initiator is selected from the group consisting of peroxodisulfates; peroxodiphosphates; peroxides, e.g., dibenzoyl peroxide, lauroyl peroxide, tert-butyl perbenzoate; acetylacetonate oxovanadium (IV) complex; and cer ammonium nitrate.

In one embodiment of the invention, the radical initiator is selected from the group consisting of peroxodisulfates and peroxodiphosphates.

In one embodiment of the invention, the radical initiator is potassium peroxodisulfate, sodium peroxodisulfate or ammonium peroxodisulfate.

In another embodiment of the invention, the radical initiator is potassium peroxodiphosphate, sodium peroxodiphosphate or ammonium peroxodiphosphate.

In one embodiment of the invention, the radical initiator is able to generate radicals at room temperature. Examples of suitable initiators include azobisisobutyronitrile, 2,2'―azobis―(2,4―dimethyl valeronitrile), 2,2'―azobis (methyl isobutyrate), benzoyl peroxide, acetyl peroxide, cumyl peroxide, t-butyl peroxide, t-butyl hydroperoxide, cumyl hydroperoxide, and t-butyl perbenzoate.

In one embodiment of the invention, the radical initiator is a redox system comprising at least one organic or inorganic oxidizing agent and at least one organic or inorganic reducing agent that are co-reactive to generate free radicals effective to initiate grafting reactions. In such systems, the redox initiators provide reactive radicals at lower temperatures than single compound radical initiators, thus minimizing the risk of undesired side reactions during the grafting reaction.

In one embodiment of the invention, the oxidizing agent is selected from the group consisting of peroxides; peroxodisulfates; manganese triacetate; potassium permanganate; and mixtures thereof. Representative peroxides include, without being limited thereto, hydrogen peroxide, potassium peroxide, dibenzoyl peroxide, dicumyl peroxide and other diacyl peroxides, hydroperoxides such as cumene hydroperoxide and tertiary butyl hydroperoxide, peresters such as β―butyl― peroxybenzoate and tertiary butyl peroxide acetate, and ketone hydroperoxides such as methyl ethyl ketone hydroperoxide. Suitable peroxodisulfates comprise potassium peroxodisulfate and ammonium peroxodisulfate.

Representative reducing agents include, without being limited thereto, sulfinic acids; sulfites such as sodium bisulfite, ammonium bisulfite, sodium sulfite, sodium pyrosulfite, sodium metabisulfite, sodium thiosulfate; alpha-aminosulfones such as bis(tolysulfonmethyl)-benzyl amine; tertiary amines such as diisopropyl-p-toluidine, dimethyl aniline, dialkyl-p-halogenated aniline and dimethyl-p-toluidine; aminealdehyde condensation products, for example, the condensation products of aliphatic aldehydes such as butyraldehyde with primary amines such as aniline or bu― tylamine; organic acids such as oxalic acid, malonic acid, citric acid, ascorbic acid and mixtures thereof; and transition metal compounds comprising the transition metal in a low oxidation state. Examples include compounds of Fe²⁺, Mn²⁺, Cr³⁺, V²⁺, V³⁺, Co²⁺, Ni²⁺ and Cu⁺.

Examples of suitable redox systems include peroxodisulfates in combination with cysteine, peroxodisulfates in combination with metabisulfite, peroxodisulfates in combination with thiosulfate, peroxides in combination with thiosulfate, peroxides in combination with metal ions, peroxides in combination with sodium hyposulfite, Fe²⁺ in combination with H₂O₂, peroxides in combination with tertiary amines; and potassium permanganate in combination with oxalic acid.

In one embodiment of the invention, the radical initiator is selected from the group consisting of peroxides in combination with metal ions, and peroxides in combination with sodium hyposulfite.

In a further embodiment of the invention, the radical initiator is hydrogen peroxide in combination with Fe²⁺. In another embodiment of the invention, the radical initiator is hydrogen peroxide in combination with Cr²⁺, V²⁺, Ti^{3+,} Co²⁺ or Cu⁺.

In one embodiment of the invention, the radical initiator is a peroxodisulfate in combination with metabisulfite.

In one embodiment of the invention, the radical initiator is a peroxodisulfate in combination with thiosulfate.

In one embodiment of the invention, the radical initiator is a peroxide in combination with thiosulfate.

In one embodiment of the invention, the radical initiator is a tertiary amine in combination with an organic peroxide.

In one embodiment of the invention, the radical initiator is a peroxodisulfate in combination with N,Nʹ―tetramethyl ethylene diamine (TEMED).

In one embodiment of the invention, the radical initiator is benzoyl peroxide in combination with N,N-dimethylaniline.

In one embodiment of the invention, the redox system comprises a redox catalyst (or promoter), for instance, an organic salt of a transition metal, such as cobalt naphthenate, nickel naphthenate, manganese naphthenate or iron naphthenate, copper octoate, copper acetylacetonate, iron hexoate or iron propionate.

In one embodiment of the invention, the concentration of the radical initiator is from 0.01 to 7 wt%, for instance from 0.1 to 0.4 wt% or from 2 to 4 wt%, relative to the total weight of the solution.

In one embodiment of the invention, the graft copolymerization is carried out at a temperature in the range of from 20 to 100°C, for instance, from 65 to 80°C; or from 22 to 35°C.

In one embodiment of the invention, the polymer solution is irradiated for a time in the range of from 1 s to 24 h, for instance, from 1 min to 40 min or from 2 h to 5 h.

In one embodiment of the invention, the reaction is carried out in a microreactor under continuous flow conditions.

The present invention also provides a graft copolymer formed by the inventive process, wherein the graft copolymer comprises
i) 50 to 99.8 wt%, for instance 70 to 99.5 wt%, or even 90 to 99 wt%, based on the total weight of the graft copolymer, of at least one polysulfone or polyethersulfone, and
ii) 0.2 to 50 wt%, for instance 0.5 to 30 wt%, or even 1.0 to 10 wt%, based on the total weight of the graft copolymer, of at least one polyvinylpyrrolidone grafted thereto.

In one embodiment of the invention, the product obtained by the graft copolymerization is further processed to remove unreacted starting materials and by-products, for instance, unreacted polyvinylpyrrolidone. In one embodiment, the grafted copolymer is precipitated from the solution by addition of a precipitation medium. Examples of suitable precipitation media include water and alcohols like methanol or ethanol. In one embodiment, residual amounts of soluble polyvinylpyrrolidone are removed from the precipitate by extraction. Examples of suitable extraction media include methanol, ethanol, tetrahydrofurane, and supercritical carbon dioxide. In one embodiment, the precipitate is extracted with methanol. In one embodiment, the precipitate is subsequently dried to remove volatiles.

In one embodiment of the invention, the purified precipitate is dissolved in a suitable solvent to produce a polymer solution for the production of porous flat sheet membranes or hollow fiber membranes. Examples of suitable solvents include dichloromethane, NMP and dimethyl acetamide (DMAC). In one embodiment, NMP is used to dissolve the precipitate.

In another embodiment of the invention, the copolymer solution is directly used for the production of porous flat sheet membranes or hollow fiber membranes without any purification step.

A hollow fiber membrane can be prepared by a solvent phase inversion spinning process comprising extruding the copolymer solution through the outer ring slit of a hollow fiber spinning nozzle and simultaneously extruding a center fluid through the inner bore of the hollow fiber spinning nozzle, into a precipitation bath, washing the membrane obtained, drying said membrane and, optionally, sterilizing said membrane, e.g., by treatment with steam, ethylene oxide or radiation.

The center fluid used for preparing the membrane comprises at least one of the above―mentioned solvents and a precipitation medium chosen from the group of water, glycerol and other alcohols.

The center fluid generally comprises 40-100 wt% precipitation medium and 0-60 wt% of solvent. In one embodiment, the center fluid comprises 44-69 wt% precipitation medium and 29-54 wt% of solvent. In a particular embodiment, the cen― ter fluid comprises 49-61 wt% of water and 37-49 wt% of NMP. In another embodiment, the center fluid comprises 53-56 wt% of water and 44-47 wt% of NMP. The center fluid should also be degassed and filtered.

In one embodiment of the process for preparing the membrane, the temperature of the spinneret is 50―70°C, e.g., 55―61°C. The distance between the opening of the nozzle and the precipitation bath is from 30 to 110 cm, in particular 45 to 55 cm. The precipitation bath has a temperature of 10-80°C, e.g., 20-40°C. In one embodiment, the spinning velocity is in the range of 15-100 m/min, in particular 25-45 m/min.

In one embodiment of the process, the polymer solution coming out through the center slit opening of the spinning die is, on the outside of the precipitating fiber, exposed to a humid steam/air mixture comprising a solvent in a content of between 0 and 10 wt%, related to the water content.

In one embodiment of the process, the temperature of the humid steam/air mixture is at least 15°C, preferably at least 30°C, and at most 75°C, but is preferably not higher than 62°C. Further, the relative humidity in the humid steam/air mixture is between 60 and 100%.

In another embodiment of the process, the humid steam/air mixture comprises a solvent in an amount of between 0 and 5 wt%, related to the water content. Preferably, the humid steam/air mixture comprises a solvent in an amount of between 0 and 3 wt%, related to the water content. The effect of the solvent in the temperature-controlled steam atmosphere is to control the speed of precipitation of the fibers. If less solvent is employed, a dense outer surface will result, and if more solvent is used, the outer surface will have a more open structure. By controlling the amount of solvent within the temperature-controlled steam atmosphere surrounding the precipitating membrane, the amount and size of the pores on the outer surface of the membrane can be modified and controlled.

In one embodiment of the invention, the precipitation bath comprises from 85 to 100 wt% of water and from 0 to 15 wt% of solvent, e.g. NMP. In another embodiment, the precipitation bath comprises from 90 to 100 cato water and from 0 to 10 wet% NMP.

In one embodiment of the invention, the membranes are asymmetric, i.e. the mean diameter of the pores of one surface of the membrane is different from the mean pore diameter on the other membrane surface. For instance, the pores on the lumen surface of a hollow fiber membrane may be smaller or larger than the pores on the outside surface of the hollow fiber membrane. In one embodiment, the mean diameter of the pores on the surface having the smaller pores is in the range of from 1 nm to 500 nm, for instance, from 1 to 10 nm, or from 100 to 400 nm.

In one embodiment, there is a thin separation layer on the inner side of the fibers. The membrane may have, for example, a 3-layer structure or sponge-like or foam-like structure.

The membranes produced from the graft copolymer of the invention can be used in plasmapheresis, haemodialysis, haemodiafiltration or haemofiltration applications. The membranes may also be used in bioprocessing, plasma fractionation, in the preparation of protein solutions, and in water purification.

It will be understood that the features mentioned above and those described hereinafter can be used not only in the combination specified but also in other combinations or on their own, without departing from the scope of the present invention.

The present invention will now be described in more detail in the examples below. The examples are not intended to limit the scope of the present invention, but are merely an illustration of particular embodiments of the invention.

### Examples

### Starting materials

- PSU: polysulfone Udel^{®} P-1700 NT06, Solvay S.A.; Mₙ approx. 40 kDa;
- PVP-K30: polyvinylpyrrolidone Luvitec K30, BASF S.E.; Mₙ = 14 kDa; M_{w} = kDa;
- PVP-K85: polyvinylpyrrolidone Luvitec K85, BASF S.E.; Mₙ = 250 kDa; M_{w} = 1,100 kDa;
- PPODS: Potassium peroxodisulfate, Fisher Scientific;
- DBPO: Dibenzoylperoxide, Acros Organics.

The polymers were dried overnight at 80°C before use.

### Determination of PVP content of the graft copolymer

For the determination of the PVP content of the graft copolymers, the extrudate was dissolved in NMP to produce a 10% (w/w) solution and precipitated from the solution by the addition of methanol. The precipitate was transferred to a Soxhlet extractor, extracted with methanol for 65 hrs to remove any residual PVP not chemically bound in the graft copolymer, and subsequently dried.

Polysulfone/polyvinylpyrrolidone copolymers were dissolved in CDCl₃. ¹H―NMR spectra were recorded and PVP content was calculated from the integrals of the signal at 3.0-3.5 ppm (2H) for polyvinylpyrrolidone, 7.84 ppm (4H) for polysulfone and the molecular weights of the respective repeating units (polysulfone 442.53 g/mol; polyvinylpyrrolidone 111.14 g/mol).

Polyethersulfone/polyvinylpyrrolidone copolymers were dissolved in d₆―DMSO. ¹H―NMR spectra were recorded and PVP content was calculated from the integrals of the signal at 2.85-3.35 ppm (2H) for polyvinylpyrrolidone, 8.0 ppm (4H) for polyethersulfone and the molecular weights of the respective repeating units (polyethersulfone 232.26 g/mol; polyvinylpyrrolidone 111.14 g/mol).

### Example 1

To a solution containing 14.8 wt% PSU and 3 wt% PVP-K30 in NMP at 70°C, 2.2 wt% PPODS in H₂O/NMP were added and the reaction mixture was stirred for 3, 5 and 17 h in a nitrogen atmosphere. The total amount of water in the reaction mixture was 5 wt%. The content of chemically bound PVP in the product was determined to be 0.4 wt% PVP after 3 h, 0.4 wt% PVP after 5 h, and 0.2 wt% PVP after 17 h.

### Example 2

To a solution containing 21.8 wt% PSU and 4.4 wt% PVP-K85 in NMP at 70°C, 2.1 wt% PPODS in H₂O/NMP were added and the reaction mixture was stirred for 21 h in a nitrogen atmosphere. The total amount of water in the reaction mixture was 5 wt%. The content of chemically bound PVP in the product was 2.4 wt%.

### Example 3

To a solution containing 21.8 wt% PSU and 4.4 wt% PVP-K85 in NMP at 70°C, 1.9 wt% DBPO were added and the reaction mixture was stirred for 21 h in a nitrogen atmosphere. The content of chemically bound PVP in the product was 4.0 wt%.

## Claims

1. A process for preparing a graft copolymer comprising the steps of
i) forming a polymer solution by dissolving at least one polysulfone or polyethersulfone and at least one polyvinylpyrrolidone in at least one solvent;
ii) adding a radical initiator to the polymer solution; and
iii) heating the polymer solution with the at least one radical initiator at a temperature at which the radical initiator decomposes.

2. The process of claim 1, wherein the polymer solution before the addition of the radical initiator comprises
i) 1 to 30 wt.%, relative to the total weight of the solution, of the at least one polysulfone or polyethersulfone,
ii) 1 to 10 wt.%, relative to the total weight of the solution, of the at least one polyvinylpyrrolidone, and
iii) 60 to 98 wt.%, relative to the total weight of the solution, of the at least one solvent.

3. The process of claim 1 or 2, wherein the amount of the radical initiator is from 0.01 to 7 wt%, relative to the total weight of the polymer solution.

4. The process of any one of claims 1 to 3, wherein the solvent is N-methyl pyrrolidone.

5. The process of any one of claims 1 to 4, wherein the radical initiator is selected from the group consisting of peroxodisulfates; peroxodiphosphates; peroxides; acetylacetonate oxovanadium (IV) complex; and cer ammonium nitrate.

6. The process of any one of claims 1 to 4, wherein the radical initiator is selected from the group consisting of azobisisobutyronitrile, 2,2'-azobis-(2,4-dimethyl valeronitrile), 2,2'-azobis (methyl isobutyrate), benzoyl peroxide, acetyl peroxide, cumyl peroxide, t-butyl peroxide, t-butyl hydroperoxide, cumyl hydroperoxide, and t-butyl perbenzoate.

7. The process of any one of claims 1 to 4, wherein the radical initiator is a redox system comprising at least one organic or inorganic oxidizing agent and at least one organic or inorganic reducing agent.

8. The process of claim 7, wherein the oxidizing agent is selected from the group consisting of peroxides; peroxodisulfates; manganese triacetate; potassium permanganate; and mixtures thereof.

9. The process of claim 7, wherein the reducing agent is selected from the group consisting of sulfinic acids; sulfites; alpha-aminosulfones; tertiary amines; aminealdehyde condensation products; organic acids; and transition metal compounds comprising the transition metal in a low oxidation state.

10. The process of claim 7, wherein the radical initiator is selected from the group consisting of peroxodisulfates in combination with cysteine, peroxodisulfates in combination with metabisulfite, peroxodisulfates in combination with thiosulfate, peroxides in combination with thiosulfate, peroxides in combination with metal ions, peroxides in combination with sodium hyposulfite, Fe²⁺ in combination with H₂O₂, peroxides in combination with tertiary amines; and potassium permanganate in combination with oxalic acid.

11. The process of any one of claims 7 to 10, wherein the redox system comprises a promoter selected from the group consisting of cobalt naphthenate, nickel naphthenate, manganese naphthenate, iron naphthenate, copper octoate, copper acetylacetonate, iron hexoate, and iron propionate.

12. A graft copolymer produced by a process according to any one of claims 1 to 11, comprising
i) 50 to 99.8 wt.%, based on the total weight of the graft copolymer, of at least one polysulfone or polyethersulfone, and
ii) 0.2 to 50 wt.%, based on the total weight of the graft copolymer, of at least one polyvinylpyrrolidone grafted thereto.

13. Use of the graft copolymer of claim 12 in the production of porous membranes.

14. A porous membrane comprising the graft copolymer of claim 12.

15. The porous membrane of claim 14, being an asymmetric hollow fiber membrane.
